## Europäisches Patentamt
## European Patent Office
## Office européen des brevets

(11) Numéro de publication: **0 148 063**
**A1**

(12) # DEMANDE DE BREVET EUROPEEN

(21) Numéro de dépôt: **84402533.8**

(22) Date de dépôt: **07.12.84**

(51) Int. Cl.⁴: **H 04 N 7/13**

(30) Priorité: **14.12.83 FR 8320027**

(43) Date de publication de la demande:
**10.07.85 Bulletin 85/28**

(84) Etats contractants désignés:
**DE GB NL**

(71) Demandeur: **THOMSON-CSF**
**173, Boulevard Haussmann**
**F-75379 Paris Cedex 08(FR)**

(72) Inventeur: **Catros, Jean-Yves**
**THOMSON-CSF SCPI 173, bld Haussmann**
**F-75379 Paris Cedex 08(FR)**

(74) Mandataire: **Lincot, Georges et al,**
**THOMSON-CSF SCPI 173, Bld Haussmann**
**F-75379 Paris Cedex 08(FR)**

(54) **Procédé de compression de débit de données successivement transmises entre un émetteur et un récepteur de télévision, et système mettant en oeuvre le procédé.**

(57) Le procédé et le système pour la compression du débit des données entre un émetteur et un récepteur de télévision mettent en oeuvre au niveau de l'émetteur un système de codage différentiel (12) comprenant un circuit (14, 15) de calcul et de propagation de coûts de codage par rapport à des seuils de visibilité pour lesquels une erreur de codage devient apparente sur l'image reçue, le codage étant effectué en utilisant au moins deux caractéristiques de quantification et/ou de prédiction différentes. Un dispositif (13) relié au système de codage différentiel (12) transmet vers le récepteur une indication de changement de caractéristique à la place de la donnée correspondante au point d'image qui doit être transmis lorsque le point se trouve dans une zone d'image nécessitant ce changement. Les données ont des codes dont la longueur dépend de la position des points dans les zones uniformes ou de contour de l'image. Un dispositif est prévu au niveau du récepteur, pour reconstruire la donnée correspondante du point non transmis en fonction d'échantillons de points déjà connus du récepteur.
Application: transmission d'image de télévision.

./...

Fig.7

1

## Procédé de compression de débit de données successivement transmises entre un émetteur et un récepteur de télévision et système mettant en oeuvre le procédé

L'invention concerne un procédé et un système de compression de débit de données transmises entre un émetteur et un récepteur de télévision.

En télévision numérique, les signaux de luminance et de différence de couleurs sont numérisés à huit éléments binaires par point, avec une structure et une fréquence d'échantillonnage qui dépendent du problème traité. Ces informations sont généralement transmises en temps réel et leur débit brut est très élevé, supérieur à 140 mégabits/seconde, en principe, ce qui impose de réduire leur débit pour pouvoir emprunter les supports de transmission existants.

On connaît différents procédés et dispositifs de réduction de débit, parmi ceux-ci, les procédés de codage par modulation d'impulsions codées différentielles des signaux de télévision sont particulièrement intéressants par leur simplicité de réalisation, et ceci d'autant plus que les données transmises sont constituées par des mots de code binaire de longueur fixe, car les problèmes de gestion des mémoires tampon nécessaires à l'adaptation du débit variable de l'émetteur au débit fixe du canal reliant l'émetteur au récepteur sont éliminés, et de plus, l'emploi d'un codage intra-image permet d'éviter l'emploi systématique de mémoires d'image. Les procédés de codage différentiel connus consistent à coder la différence entre la valeur d'un échantillon du signal et une estimation, ou prédiction, calculée à partir des valeurs des échantillons précédents déjà codés, cette différence étant quantifiée par un quantificateur à n niveaux de quantification. A chaque niveau i est associé un code $C_i$ qui est transmis sur la ligne ou le canal de transmission. Le code reçu est transformé en sa valeur réelle qui est ensuite additionnée à une valeur de prédiction calculée par le récepteur pour reconstituer le signal. Une boucle de contre-réaction permet de réaliser au niveau de l'émetteur une prédiction identique à celle qui est élaborée au récepteur.

Des exemples de réalisation de dispositifs de codage-décodage différentiel de données numériques sont décrits dans la demande de brevet français n° 81 20167 déposée au nom de la Demanderesse.

Un problème se pose cependant lorsque l'on cherche à appliquer les méthodes de codage-décodage différentiel à la transmission des images de télévision, notamment, lorsque l'on veut obtenir une compression de débit des données transmises importante, car les procédés de codage différentiel ne permettent pas de descendre en-dessous de quatre éléments binaires ou bits par point d'image transmis, avec un codage intra-image et un code à longueur fixe pour la composante de luminance. En-dessous de cette valeur la qualité de l'image reconstituée n'est plus acceptable.

Une compression de débit importante entraîne en effet, des niveaux de quantification espacés, ce qui pose des problèmes de restitution de l'image, à la fois pour les zones d'image uniformes, et pour les contours de l'image. On constate que dans les zones uniformes de l'image, de faibles variations de luminance sont directement perçues par l'oeil et que par conséquent, il serait préférable de quantifier le signal de luminance des zones uniformes à l'aide de quantificateurs ayant des niveaux resserrés, pour ne pas amplifier exagérément les faibles variations de luminance qui pourraient laisser apparaître de faux contours au voisinage de l'erreur de prédiction nulle, et que par contre sur les contours de l'image qui marquent la transition entre deux zones uniformes, une quantification à l'aide de niveaux de reconstruction espacés serait préférable pour mieux restituer les contours. Toutefois, dans ce deuxième cas, l'espacement entre deux niveaux ne peut dépasser une certaine limite au-delà de laquelle, les contours apparaissent restitués sous forme de paliers ou de marches d'escalier.

Pour résoudre ce problème, une solution consiste à commuter les quantificateurs sur deux caractéristiques de quantification différentes en fonction de l'aspect local du point de l'image à transmettre. Par exemple, pour des points situés dans des zones uniformes de l'image, le codage sera effectué à l'aide d'un quantificateur à niveaux de reconstruction resserrés au voisinage de l'erreur de prédiction nulle, et pour des points situés dans des zones de contour ou texturées de l'image, un quantificateur à niveaux de reconstruction élevés sera utilisé.

Un mode de réalisation donnant de bons résultats qui met en oeuvre la solution précitée est décrit dans la demande de brevet n° 82 14434. Le système décrit est un système de codage différentiel intra-image, à mot de code de longueur fixe, utilisant une commutation entre deux caractéristiques de quantification. Un mot de code particulier sert à envoyer l'indication de changement de caractéristique. Lorsqu'un changement se produit, le point correspondant n'est pas codé mais reconstruit à partir des valeurs décodées précédentes et donc connues du récepteur comme de l'émetteur.

La commutation entre les deux caractéristiques de quantification est réalisée de manière optimale au sens où sur toute une ligne la somme d'une fonction de l'erreur de codage est minimisée.

La minimisation de l'erreur de codage est obtenue en appliquant un algorithme de programmation dynamique.

Ce système permet d'obtenir des images reconstruites au récepteur en ne transmettant sur le canal de transmission reliant l'émetteur au récepteur que trois éléments binaires par échantillon de luminance et/ou de chrominance. Malheureusement ce procédé ne permet pas des débits inférieurs à trois éléments binaires par échantillons d'image transmis.

Le but de l'invention est de pallier l'inconvénient précité.

A cet effet, l'invention a pour objet un procédé de compression de débit de données successivement transmises entre un émetteur et un récepteur de télévision, les données étant représentatives des valeurs de luminance et/ou de chrominance de chaque point d'une image de télévision et étant codées à l'émetteur par un dispositif de codage différentiel du type comprenant au moins un prédicteur, un quantificateur, un dispositif de reconstruction de la donnée transmise et un allocateur de code et décodées au récepteur par un décodeur différentiel comprenant au moins un transformateur de codes, un prédicteur et un dispositif de reconstruction de la donnée transmise, le procédé consistant à déterminer avant l'émission en fonction des positions respectives des points à l'intérieur des zones uniformes ou des zones de contours les codes à transmettre à l'aide d'au moins deux caractéristiques différentes $Q_1$ et $Q_2$ de quantification

et/ou de prédiction $P_1$ et $P_2$ et à transmettre l'indication de changement C de caractéristique au récepteur à la place de la donnée relative au point pour lequel intervient ce changement lorsque le codage de la donnée est obtenu en utilisant une caractéristique différente de celle qui a été utilisée pour la donnée précédemment transmise, caractérisé en ce que le codage des données à transmettre effectué par l'allocateur de code est obtenu à l'aide de codes binaires dont les longueurs dépendent du nombre de niveaux de quantification de chaque caractéristique de quantification utilisée et en ce que la caractéristique de quantification $Q_2$ pour quantifier les échantillons compris entre les zones uniformes de l'image a un nombre de niveaux de quantification inférieur au nombre de niveaux de quantification de la caractéristique de quantification $Q_1$ utilisée pour quantifier les échantillons compris dans les zones de contour.

L'invention a également pour objet un système de compression de débit de données transmises entre un émetteur et un récepteur faisant application du procédé précité.

D'autres caractéristiques et avantages de l'invention apparaîtront également à l'aide de la description faite au regard des dessins annexés donnés uniquement à titre d'exemple et dans lesquels :

- La figure 1 représente un système de compression de débit de données transmises entre un émetteur et un récepteur mettant en oeuvre un dispositif connu de codage-décodage différentiel.

- La figure 2 est une représentation du graphe d'une fonction de visibilité et illustre la méthode de détermination du coût de codage.

- Les figures 3 et 4 illustrent le procédé de détermination du chemin de codage minimum pour coder chaque point de l'image.

- La figure 5 est une représentation d'une caractéristique de quantification utilisée pour coder les points à transmettre dans des zones de contours de l'image.

- La figure 6A est une représentation d'une caractéristique de quantification à 7 niveaux utilisée pour coder les points situés dans des zones uniformes de l'image.

- La figure 6B est une représentation d'une caractéristique de quantification à trois niveaux utilisée pour coder les points situés dans des zones uniformes de l'image.

- La figure 7 est une représentation du dispositif d'émission des codes selon l'invention.

- Les figures 8 et 9 représentent des modes de réalisation des dispositifs de propagation des erreurs de codage du dispositif de la figure 7.

- Les figures 10, 11, 12 et 13 sont des représentations des dispositifs de codage des figures 8 et 9.

- La figure 14 représente un mode de réalisation du dispositif de réception.

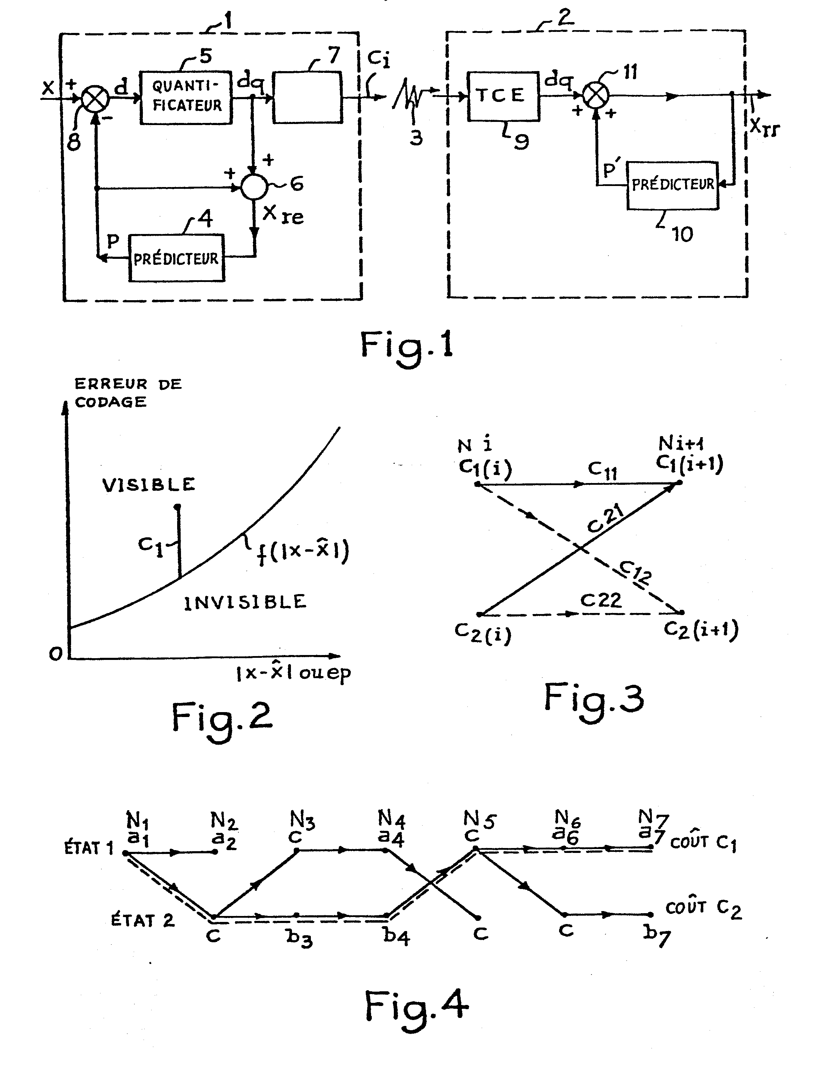

Le système connu de codage-décodage différentiel représenté à la figure 1 est constitué, du côté émetteur, par un dispositif de codage différentiel 1, représenté à l'intérieur d'un rectangle en pointillé, et du côté récepteur, par un dispositif de décodage différentiel 2, représenté également à l'intérieur d'un rectangle en pointillé. La sortie du dispositif de codage 1 est reliée à l'entrée du dispositif de décodage 2 par l'intermédiaire d'un canal de transmission 3. Le dispositif de codage différentiel 1 comprend : un prédicteur 4, un quantificateur 5, un dispositif de reconstruction de la donnée transmise 6, ainsi qu'un allocateur de code 7. La donnée X à transmettre est appliquée à l'entrée d'un soustracteur 8 dont l'autre entrée est reliée à la sortie du prédicteur 4. Le prédicteur 4 délivre une valeur de prédiction P. La donnée à coder X diminuée de la valeur de la prédiction P est appliquée à l'entrée du quantificateur 5, par la sortie du soustracteur 8, pour être quantifiée selon n niveaux. A chaque niveau i de quantification, un allocateur de code 7 associe un code $C_i$ qui est transmis sur la ligne ou le canal 3. Le niveau dq de quantification délivrés par le quantificateur 5 et qui correspond à la différence ou erreur de prédiction X-P , est appliqué à l'entrée du dispositif de reconstruction de la donnée transmise 6, généralement constitué par un additionneur, dont l'autre entrée est reliée à la sortie du prédicteur 4. La donnée reconstruite $X_{re}$ transmise à la sortie du dispositif de reconstruction de la donnée transmise 6, est appliquée à l'entrée du prédicteur 4. Le code $C_i$ est reçu par le dispositif de décodage 2 qui est constitué par un transformateur de code 9, un prédicteur 10 et un dispositif de reconstruction de la donnée reçue 11. Le transformateur de code 9 reconstitue les niveaux de quantification dq pour les appliquer à une première entrée du dispositif de reconstruction de la donnée reçue 11. Le dispositif de reconstruction de la donnée reçue 11, généralement constitué par un additionneur, reçoit sur une autre entrée la valeur de la prédiction P' calculée par le prédicteur 10 et délivre sur sa sortie la valeur $X_{rr}$ de la donnée reconstruite reçue.

L'opération de quantification effectuée par le quantificateur 5 permet d'associer à toutes les valeurs de différence X-P comprises entre deux seuils $S_i$ et $S_{i+1}$ une valeur unique de code $C_i$. Cette opération, effectuée avec le concours de l'allocateur de code 7, permet en codage différentiel de réaliser la réduction de débit. Dans le cas où il n'y a pas d'erreurs de transmission, et comme l'on s'arrange aussi bien dans le dispositif d'émission que dans le dispositif de réception, pour avoir les mêmes fonctions de prédiction pour les prédicteurs 4 et 10, les valeurs reconstruites respectivement $X_{re}$ et $X_{rr}$ à l'émetteur et au récepteur sont identiques. Dans le cas contraire, ces valeurs sont différentes et comme la valeur de prédiction calculée dépend de la valeur reconstruite à l'entrée du prédicteur, on constate qu'en cas d'erreur, les prédictions à l'émetteur et au récepteur divergent. Par conséquent, si aucune précaution n'est prise pour minimiser les erreurs de transmission aux instants de transmission suivants, les données reçues suivantes sont entachées d'erreurs. Des dispositifs évitant la propagation d'erreurs comme ceux décrits dans la demande de brevet français 81 20167 peuvent naturellement être utilisés pour résoudre ce problème.

Le procédé et le système selon l'invention mettent en oeuvre un système de codage différentiel conforme à celui qui est décrit à la figure 1 à la différence toutefois que deux caractéristiques de quantification et/ou de prédiction, au lieu d'une, sont utilisées à l'émetteur comme au récepteur pour coder suivant deux types de codes de longueur fixe ou variable les échantillons de luminance et/ou de chrominance suivant qu'ils correspondent à des points situés dans des zones uniformes ou de contours de l'image transmise.

Le procédé et le système selon l'invention mettent également en oeuvre un dispositif pour transmettre une indication de changement de caractéristique à la place du point correspondant qui doit être transmis lorsque le point se trouve dans une zone d'image nécessitant ce changement et un dispositif, au niveau du récepteur, pour reconstruire le point non transmis en fonction des échantillons déjà connus du récepteur. Pour parvenir à ce résultat, le procédé consiste à minimiser la somme d'une fonction des erreurs de codage. Cette fonction peut être par exemple la somme des valeurs absolues ou des carrés ou des puissances $n^{\text{ème}}$ des erreurs de codage. Une autre possibilité consiste à établir une fonction de visibilité des erreurs de codage. En effet en fonction de l'allure locale du signal soit qu'il corresponde à un point d'une zone uniforme, de texture ou encore de contours, une erreur de codage sera plus ou moins visible. C'est donc dans ce dernier cas la somme des visibilités des erreurs de codage, elle-même fonction de l'erreur de codage de chaque point et du voisinage de chaque point considéré qui sera minimisée. Ce voisinage est défini par exemple par la fonction $\sum_i |X - X_i|$ où X est le point à coder et $X_i$ ses points voisins immédiats dans la même ligne, la ligne précédente ou la ligne suivante. L'erreur de codage correspond, soit à l'erreur de prédiction X-P diminuée de sa valeur quantifiée Q(X-P), Q représentant la caractéristique de quantification utilisée, soit à la différence entre la donnée X et la valeur reconstruite de la donnée précédente. La fonction de visibilité détermine le seuil au-dessus duquel l'erreur de codage devient apparente dans l'image reçue, et les points considérés dans ce mode de calcul sont, les voisins immédiats du point à coder. Un graphe d'une fonction de visibilité est représenté à la figure 2. En abscisse est reportée la différence $(X-\hat{X})$ représentant l'écart entre la valeur X de la donnée du point à coder et une valeur $\hat{X}$ obtenue à partir des points voisins du point à coder.

A chaque erreur de codage est associée un coût $C_1$ qui est nul pour toute erreur en-dessous du seuil défini par la fonction de visibilité et qui est, par exemple, proportionnel à la valeur de l'erreur dépassant le seuil. Pour rendre par exemple minimum la somme des erreurs de codage situées au-dessus du seuil de visibilité pour l'ensemble des points d'une ligne d'image, on utilisera une méthode de programmation dynamique qui, à chaque point d'image, propagera deux chemins affectés chacun d'un coût défini à partir d'une fonction de visibilité. L'illustration de cette méthode est représentée aux figures 3 et 4. Puisque deux caractéristiques de quantification $Q_1$ et $Q_2$ peuvent être utilisées pour coder chaque point d'image, chaque point d'image peut être représenté par deux états caractéristiques de codage différents résultant de l'utilisation de l'une ou de l'autre des deux caractéristiques de quantification. Dans la suite de la description, on désignera par état 1, l'état qui résulte du codage d'un point avec la première caractéristique de quantification $Q_1$ et par état 2, l'état qui résulte du codage d'un point avec la deuxième caractéristique de quantification $Q_2$ . Naturellement en fonction de ce qui précède, chaque état sera caractérisé par un coût de codage $C_1$ ou $C_2$ . Ainsi sur la figure 3 les états des points Ni et Ni+1 sont représentés affectés des coûts $C_{1(i)}$ et $C_{1(i+1)}$ pour l'état 1, et $C_{2(i)}$ et $C_{2(i+1)}$ pour l'état 2. En venant du point Ni , deux chemins sont possibles pour placer le point suivant Ni+1 dans l'état 1, un premier chemin consiste à venir directement de l'état 1 du point précédent en ajoutant un coût $C_{11}$ , et un deuxième chemin consiste à venir de l'état 2 du point précédent en ajoutant un coût $C_{21}$ . De même, pour placer le point Ni+1 dans l'état 2 deux chemins sont possibles en venant, soit directement de l'état 2 du point Ni précédent et en ajoutant un coût $C_{22}$ , soit en venant de l'état 1 du point Ni précédent et en ajoutant un coût $C_{12}$ . Pour calculer le coût $C_{1(i+1)}$ du point Ni+1 on calcule le minimum des coûts nécessaires pour arriver au point Ni+1 selon l'un ou l'autre des deux chemins. Ce qui correspond à la formule suivante,

$$C_1 (i+1) = \text{MIN} \quad (C_{1(i)} + C_{11} \text{ ; } C_{2(i)} + C_{21} ) \text{ .}$$

De même pour définir le coût $C_{2(i+1)}$ du point Ni+1 on calcule le minimum des coûts permettant de parvenir au point Ni+1 dans l'état 2 par l'un ou l'autre des deux chemins selon la formule suivante

$$C_{2(i+1)} = \text{MIN} \quad (C_{2(i)} + C_{22}, C_{1(i)} + C_{12} ) \text{ .}$$

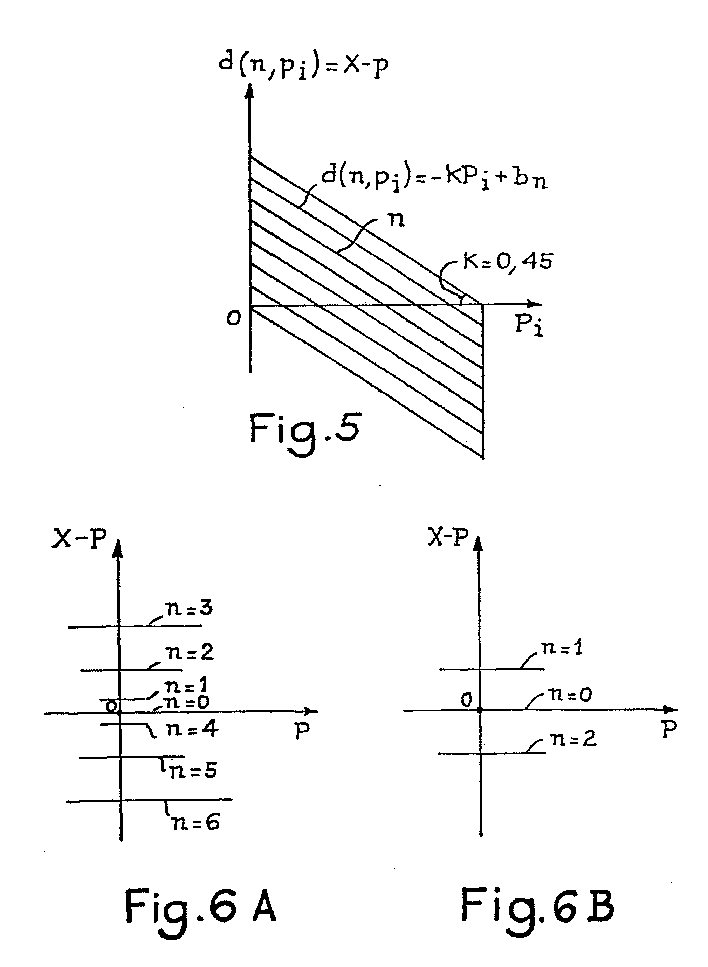

Dans ces formules, $C_{11}$ représente le coût pour passer du point Ni au point Ni+1 en faisant usage de la caractéristique de quantification $Q_1$ , $C_{22}$ représente le coût pour passer du point Ni au point Ni+1 en utilisant la caractéristique de quantification $Q_2$ , $C_{21}$ représente le coût pour passer de la caractéristique de quantification $Q_2$ utilisée pour le calcul au point Ni , à la caractéristique de quantification $Q_1$ utilisée pour le calcul au point Ni+1 , et $C_{12}$ représente le coût pour passer de l'utilisation de la caractéristique de quantification $Q_1$ au point Ni , à l'utilisation de la caractéristique de quantification $Q_2$ au point Ni+1 . En fonction des coûts obtenus par le parcours de l'un ou de l'autre chemin pour parvenir dans l'état 1 ou dans l'état 2 au point Ni+1 , le codage du point Ni+1 se détermine suivant le chemin qui présente le coût le plus faible. Ce codage pourra s'effectuer par utilisation des deux caractéristiques de quantification représentés aux figures 5 et 6A. La figure 5 représente une caractéristique de quantification spécialement utilisée pour coder les points situés dans des zones de contours ou fortement texturées de l'image.

Cette caractéristique est linéaire et est définie par un réseau de droites parallèles, dans un système de coordonnées rectangulaires portant sur l'axe des abscisses les valeurs de prédiction $P_i$ et sur l'axe des ordonnées les erreurs de prédiction des $d(npi)=X-P$ telles que

$$d(n,P_i) = -kP_i + b_n , \text{k étant inférieur ou égal à 1,}$$

n représentant le code alloué en fonction du niveau de prédiction $P_i$ et de l'erreur de prédiction X-P , $b_n$ représentant l'erreur de prédiction pour le niveau de prédiction nulle. Dans l'exemple de réalisation de l'invention pour coder une erreur de prédiction avec trois bits, sept niveaux de quantification peuvent être utilisés. Une valeur de k voisine de 0,45 pourra être choisie.

La figure 6A représente une caractéristique de quantification qui peut être utilisée pour coder des points de l'image situés dans des zones uniformes de l'image, il s'agit d'une caractéristique linéaire à 7 niveaux ayant des niveaux resserrés au voisinage de l'erreur de prédiction nulle.

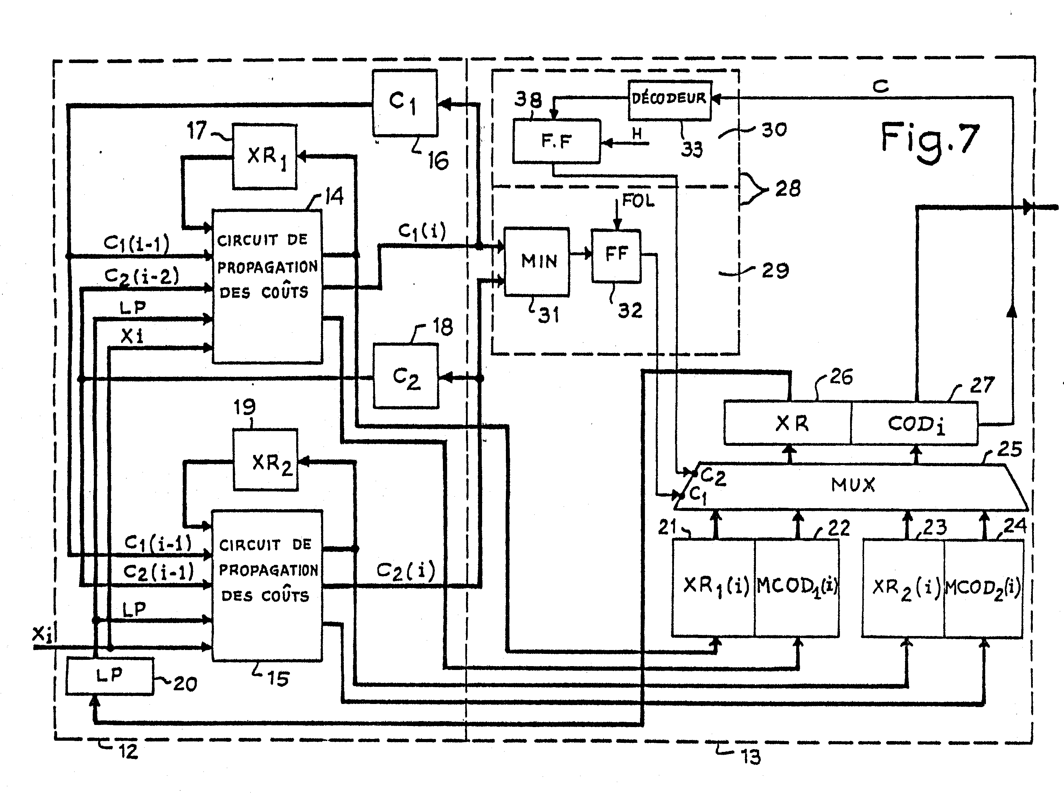

Le procédé de calcul des codes à émettre et des valeurs reconstruites est maintenant décrit à l'aide du schéma représenté à la figure 4. A partir des coûts $C_{1(i-1)}$ et $C_{2(i-1)}$ connus pour le point Ni-1 le procédé calcule les coûts $C_{1(i)}$ et $C_{2(i)}$ pour le point Ni à l'aide du procédé de minimisation d'une fonction de prise en compte des erreurs de codage précédemment décrite. Pour cela, il dispose de la donnée $X_i$ du point courant du signal de télévision, de la valeur de la donnée du point précédent reconstruite $XR_{i-1}$ et des données reconstruites de certains points de la ligne précédente. Les points précis à utiliser dépendent des fonctions de prédiction et de reconstruction choisis. Comme il est fait usage de caractéristiques de quantification différentes, un point Ni à coder nécessite un calcul de deux valeurs reconstruites et de deux codes, une première valeur reconstruite $XR_{1(i)}$ et un premier code $COD_{1(i)}$ pour

placer le point Ni dans l'état 1 , une deuxième valeur reconstruite $XR_{2(i)}$ et un deuxième code $COD_{2(i)}$ pour placer le point Ni dans l'état 2. Ces valeurs sont stockées en mémoire dans l'ordre de traitement des points sur chaque ligne d'image et la propagation des coûts, de la manière montrée à la figure 3, se poursuit jusqu'à la fin de chaque ligne. En fin de ligne, la valeur minimale des coûts $C_1$ ou $C_2$ , obtenues pour le dernier point de la ligne, initialise la recherche d'un chemin de codage pour lequel le coût de l'erreur de codage est minimale. En chaque point Ni de la ligne, le procédé consiste à choisir une parmi les deux possibilités de codes et de valeurs reconstruites suivantes $(XR1_{(i)}$ , $COD_{1(i)})$ ou $(XR_{2(i)}$ , $COD_{2(i)})$ pour donner la valeur $COD_i$ du code à transmettre et la valeur reconstruite $XR_{(i)}$ . Le choix entre ces valeurs est commandé par les valeurs de code lues de la façon représentée à la figure 4. Pour simplifier, l'exemple montré à la figure 4 est constitué par une ligne comportant sept points numérotés de $N_1$ à $N_7$ , les valeurs $a_i$ et $b_i$ représentent les codes stockés dans deux mémoires de code, $MCOD_1$ 22 et $MCOD_2$ 24 ci-après représentées à la figure 7. La lettre C désigne le code de changement qui est mémorisé dans l'une des deux mémoires $MCOD_1$ ou $MCOD_2$ lorsqu'au point Ni considéré, le procédé de minimisation des erreurs et de calcul de coût minimum pour ce point a montré la nécessité de changer de caractéristique de quantification. Ainsi sur la figure 4 le procédé de propagation des coûts fait passer du point $N_1$ dans l'état 1 au point $N_2$ dans l'état 2. Pour noter ce changement, un code noté C est mémorisé dans la mémoire $MCOD_2$ à la place du code correspondant du point $N_2$ . De même pour arriver au point $N_3$ à partir du point $N_2$ , deux chemins sont possibles, en venant soit de l'état 2 du point $N_2$ , à l'état 1 du point $N_3$ , soit en venant de l'état 2 du point $N_2$ et en restant à l'état 2 au point $N_3$ . On note que dans ces conditions l'état 2 du point $N_3$ n'a pas changé et que dans ce cas le code correspondant $b_3$ est mémorisé dans la mémoire $MCOD_2$ et que par contre le changement de caractéristique effectué pour passer de l'état 2 du point $N_2$ à l'état 1 du point $N_3$ est noté pour le point $N_3$ par le code C mémorisé dans la mémoire $MCOD_1$ . On note également que pour le point $N_4$ aucun changement n'intervient dans la propagation des coûts en venant du point $N_3$ et que par conséquent un code $a_4$ est mémorisé dans la mémoire $MCOD_1$ correspondant à l'état 1 du point $N_4$ et

qu'un code $b_4$ est mémorisé dans la mémoire $MCOD_2$ correspondant à l'état 1 l'état 2 du point $N_4$. Au point $N_5$ la propagation des coûts provenant du point $N_4$ impose simultanément un changement de caractéristiques lorsque l'on vient de l'état 1 du point $N_4$ ou de l'état 2 du point $N_4$, ce changement est comme précédemment noté par la lettre C et un code de changement est mémorisé pour le point $N_5$ dans l'une et l'autre des mémoires de code $MCOD_1$ et $MCOD_2$. On note également que pour les points $N_6$ et $N_7$ la propagation des coûts ne nécessite pas d'opération de changement de caractéristique lorsque l'on vient du point $N_5$ en restant dans l'état 1 et que par contre un changement de caractéristique s'impose pour arriver dans l'état 2 du point $N_6$ car la propagation du coût fait changer de caractéristique. Un code de changement C est donc mémorisé dans la mémoire $MCOD_2$ pour le point $N_6$ pour noter ce changement. Pour le point $N_7$ qui représente le point de fin de ligne, un code $a_7$ est mémorisé dans la mémoire $MCOD_1$ et un code $b_7$ est mémorisé dans la mémoire $MCOD_2$. Egalement, au point $N_7$, la méthode de propagation des coûts fait apparaître une erreur de codage affectée d'un coût $C_1$ pour l'état 1 du point $N_7$ et une erreur de codage affectée d'un coût $C_2$ pour l'état 2. Si l'on suppose toujours dans l'exemple montré à la figure 4, qu'au point $N_7$ le coût $C_1$ obtenu est inférieur au coût $C_2$, le procédé pour chercher le chemin optimal de codage va consister à lire le code situé dans l'une ou l'autre des mémoires $MCOD_1$ ou $MCOD_2$ en commençant par les mémoires de codes représentant les points dans l'état 1, c'est-à-dire par la mémoire $MCOD_1$ et à changer de mémoire lorsque dans la succession des codes lus un code de changement C est rencontré. Le trait en pointillés sur la figure 4 représente la succession des codes qui seront lus suivant ce principe. Ainsi la lecture de la mémoire $MCOD_1$ s'effectuera, dans un premier temps, du point $N_7$ au point $N_5$ et les codes $a_7$, $a_6$ et C seront lus, puis à l'indication de changement C du point $N_5$, la lecture de la mémoire code 1 sera interrompue et sera suivie par la lecture dans la mémoire $MCOD_2$ du point $N_4$ au point $N_2$ où les codes $b_4$, $b_3$ et C seront successivement lus. Arrivé au point $N_2$ où un code de changement est lu, la lecture de la mémoire $MCOD_2$ sera interrompue, pour être suivie par la lecture à nouveau de la mémoire $MCOD_1$ pour lire le code du point $N_1$. Ainsi le train de codes qui sera envoyé, sera défini par la suite des codes : $a_1$ , C, $b_3$ , $b_4$ , C , $a_6$ , $a_7$ . Naturellement le choix des valeurs reconstruites $XR_1$ et $XR_2$ à l'émetteur se fait en utilisant le même code de commutation ou de changement C.

Le procédé qui vient d'être décrit dont une description équivalente peut être retrouvée dans la demande de brevet français n° 82 14434, permet d'obtenir un codage des échantillons d'image à trois éléments binaires par échantillon sans qu'il y ait de dégradation directement observable au niveau de l'image reconstruite. Grâce au procédé de l'invention il est possible de diminuer encore ce débit en codant les échantillons des points situés dans les zones de contours de l'image avec des codes de longueur fixe c'est-à-dire que chaque code possède le même nombre d'éléments binaires, et en codant les échantillons des points situés dans les zones uniformes avec des codes de longueur plus courte ou variable contenant indifféremment un nombre fixe ou variable d'éléments binaires. Cet objectif est atteint en conservant pour quantifier les échantillons des points des zones de contours une caractéristique de quantification à huit niveaux, un niveau étant réservé à l'indication de changement et en utilisant une caractéristique de quantification à nombre de niveaux plus réduit par exemple 3 niveaux comme montré à la figure 6B pour quantifier les échantillons des points des zones uniformes. Typiquement cette organisation peut conduire à deux modes de réalisation qui diffèrent pour le codage des échantillons des points situés dans les zones uniformes, les codes utilisés pour coder les échantillons des zones de contours ayant par contre tous une longueur fixe de 3 bits, le code 111 étant réservé par exemple pour coder l'indication de changement de caractéristique.

Selon un premier mode de réalisation le codage des échantillons des zones uniformes est également effectué en utilisant des codes à longueur fixe comme dans les zones de contours mais ces codes ont par contre une longueur plus courte s'étendant sur deux bits. Dans ce cas une quantification à seulement 3 niveaux est nécessaire pour quantifier les échantillons des zones uniformes.

Le premier niveau ayant par exemple l'amplitude 0 volt sera représenté pour le code 00, le niveau 2 représentant par exemple une amplitude de + U volts sera représenté par le code 01 et enfin le niveau 3 représentant par exemple une amplitude de - U volts sera représenté par le code 10. Le premier mode de réalisation qui vient d'être décrit permet d'obtenir des débits moyens d'échantillons de 2,4 éléments binaires par échantillons.

Il est possible de descendre encore en-dessous de ce débit moyen en utilisant un codage à longueur variable pour coder les échantillons des points situés dans les zones uniformes. Ce processus conduit à un deuxième mode de réalisation suivant lequel la caractéristique de quantification utilisée pour quantifier les échantillons des points des zones uniformes possède encore 3 niveaux représentés par exemple comme précédemmet pour les niveaux de tension 0 volts, + U volts, et - U volts mais où le codage peut être réalisé en utilisant des codes de longueur différentes. Un exemple possible de codage est défini par le tableau de vérité suivant :

| Niveau | Code |
|--------|------|
| 0 | 1 |
| + U | 10 |
| - U | 110 |

On notera que dans cet exemple le code 111 pourra être réservé pour coder l'indication de changement de caractéristique. Le débit moyen obtenu par ce deuxième mode de réalisation est d'environ 2,2 éléments binaires par échantillons d'image transmis.

Il est à noter que dans l'un ou l'autre mode de réalisation des procédés de codage précédemment décrits, le choix d'un code à longueur fixe pour le codage des échantillons des zones de contours s'effectue de manière implicite et s'impose pratiquement à cause du fait que la répartition statistique des niveaux observés dans ces zones est très variable d'une image à l'autre et rend difficilement envisageable l'usage des codes à longueur variable dans ces zones.

Le système pour la mise en oeuvre du procédé selon l'invention va maintenant être décrit à l'aide des figures 7 à 14. Le dispositif représenté à la figure 7 comprend : un dispositif 12 de propagation des coûts $C_1$ et $C_2$, ainsi qu'un dispositif 13 de calcul des codes et des valeurs reconstruites. Le dispositif 12 est constitué par deux circuits 14, 15 de propagation des coûts pour tous les points d'une ligne de l'image, lorsque, le calcul des erreurs de codage est effectué respectivement à l'aide de la première et de la deuxième caractéristique de quantification, $Q_1$ et $Q_2$, plaçant les points de l'image à coder respectivement dans les états 1 et 2 définis précédemment. Un circuit de propagation des coûts 14 calcule le coût global $C_{1(i)}$ pour arriver dans l'état 1 au point Ni, la valeur reconstruite $XR_{1(i)}$ du point Ni ainsi que le code $COD_{1(i)}$ obtenu correspondant au coût global $C_{1(i)}$. Le coût global $C_{1(i)}$ obtenu sur une sortie du circuit de propagation des coûts 14 est mémorisé par un circuit de mémorisation 16. De même la valeur reconstruite $XR_{1(i)}$ obtenue sur une sortie du circuit de propagation des coûts 14 est mémorisée à l'intérieur d'un circuit de mémorisation 17. De façon similaire, le circuit de propagation des coûts 15 calcule, le coût global $C_{2(i)}$ nécessaire pour placer le point Ni dans l'état 2, la valeur reconstruite $XR_{2(i)}$ correspondante obtenue à l'aide de la caractéristique de quantification $Q_2$ et le code $COD_2$ correspondant au coût global $C_{2(i)}$ obtenu. Le coût global $C_{2(i)}$ fourni par une sortie correspondante du circuit de propagation des coûts 15 est mémorisé à l'intérieur d'un circuit de mémorisation 18. De même la valeur reconstruite $XR_{2(i)}$ est obtenue sur une sortie du circuit de propagation 15 et est mémorisée à l'intérieur d'un circuit de mémorisation 19. Le calcul des coûts globaux $C_{1(i)}$ et $C_{2(i)}$, des valeurs reconstruites $XR_{1(i)}$ et $XR_{2(i)}$, des codes correspondants $COD_1$ et $COD_2$ sont effectués en fonction de la donnée courante $X_{(i)}$ du point à coder, des coûts globaux $C_{1(i-1)}$ $C_{2(i-1)}$ obtenus dans les calculs effectués sur le point Ni-1 précédent et mémorisés respectivement dans les circuits de mémorisation 16 et 18, des valeurs reconstruites $XR_{1(i-1)}$ et $XR_{2(i-1)}$ de la donnée correspondante au point Ni-1 précédent et mémorisé dans les circuits de mémorisation 17 et 19, ainsi qu'en fonction des valeurs reconstruites LP de la ligne précédente mémorisées dans un circuit de mémorisation 20.

Le dispositif 13 de calcul des codes et des valeurs reconstruites est constitué par un ensemble 21, 22, 23, 24 de registres piles du type FIFO, abréviation du terme anglo-saxon "First in-First out", d'un multiplexeur 25, d'un circuit de mémorisation 26 des valeurs reconstruites pour tous les points d'une ligne, d'un circuit de mémorisation 27 des codes à transmettre ainsi que d'un circuit de commande 28 des entrées du multiplexeur 25. Le circuit de commande 28 comprend un circuit d'initialisation 29 de l'état du multiplexeur en fin de ligne d'image, ainsi qu'un circuit 30 qui permet le changement d'état du multiplexeur chaque fois qu'un code de changement est rencontré, dans le parcours du chemin optimal de codage défini précédemment, en partant de l'état optimum pour le dernier point de la ligne. Le circuit d'initialisation 29 se compose d'un circuit 31 pour le calcul du coût global minimum fourni respectivement par les circuits de propagation des coûts 14 et 15 ainsi que d'un circuit 32 de mémorisation du coût global minimum obtenu à la fin d'une ligne d'image. Le circuit de changement d'état 30 du multiplexeur 25 est constitué par un décodeur 33 du code de changement C, relié par sa sortie à l'entrée d'un basculeur 34 qui change d'état chaque fois qu'un code de changement C est décodé par le codeur 33. Les sorties du circuit de mémorisation 32 et du basculeur 34 sont reliées respectivement aux entrées de commande $C_1$ et $C_2$ du multiplexeur 25. En fonction de l'état des sorties du circuit de mémorisation 32 et du basculeur 34 le multiplexeur 25 connecte la sortie de la mémoire pile 21 ou la sortie de la mémoire pile 23 à l'entrée du dispositif de mémorisation des valeurs reconstruites 26, il connecte également en fonction de ces états la sortie du registre de pile 22 ou la sortie du registre pile 24 à l'entrée du dispositif de mémorisation des codes à transmettre 27. De cette façon si le circuit 29 d'initialisation du multiplexeur constate en fin de ligne que le coût minimum de codage pour le dernier point a été obtenu par le circuit de propagation des coûts 14, la priorité de lecture des mémoires piles 21 à 24 sera donnée aux mémoires 21 et 22 qui contiennent empilés respectivement les valeurs reconstruites $XR_1$ et les codes $COD_1$ de tous les points placés dans l'état 1 de la ligne obtenus par utilisation de la première caractéristique de quantification $Q_1$. Ces valeurs successivement lues seront transférées successivement et respectivement dans les circuits de mémorisation des valeurs reconstruites 26 et dans le circuit de mémorisation 27 des codes à transmettre. Si en cours de lecture de la mémoire 22 un code de changement est rencontré et décodé par le décodeur 33, le basculeur 34 fait changer l'état du multiplexeur 25 et commute les entrées des circuits de mémorisation 26 et 27 sur les sorties des registres de pile 23 et 24 qui contiennent respectivement les valeurs reconstruites et les codes correspondants, des points placés dans l'état 2 calculés à l'aide de la caractéristique de quantification $Q_2$. Comme le basculeur 34 change d'état chaque fois qu'un code de changement est rencontré dans la lecture des registres piles 22 ou 24 on voit que le multiplexeur 25 commute les entrées 26 et 27 alternativement sur l'une des sorties des registres 21, 22 ou 23, 24 chaque fois qu'un code de changement est rencontré. Naturellement, l'initialisation du multiplexeur 25 pourra avoir lieu à partir du deuxième état du dernier point d'une ligne, dans le cas, où le circuit d'initialisation 29 constaterait en fin de ligne que le coût de codage du dernier point, fourni par le circuit de propagation des coûts 15, est inférieur à celui fourni par le circuit de propagation des coûts 14. Dans ce cas la lecture des codes à transmettre et des valeurs reconstruites commencerait par la lecture des mémoires piles 23 et 24.

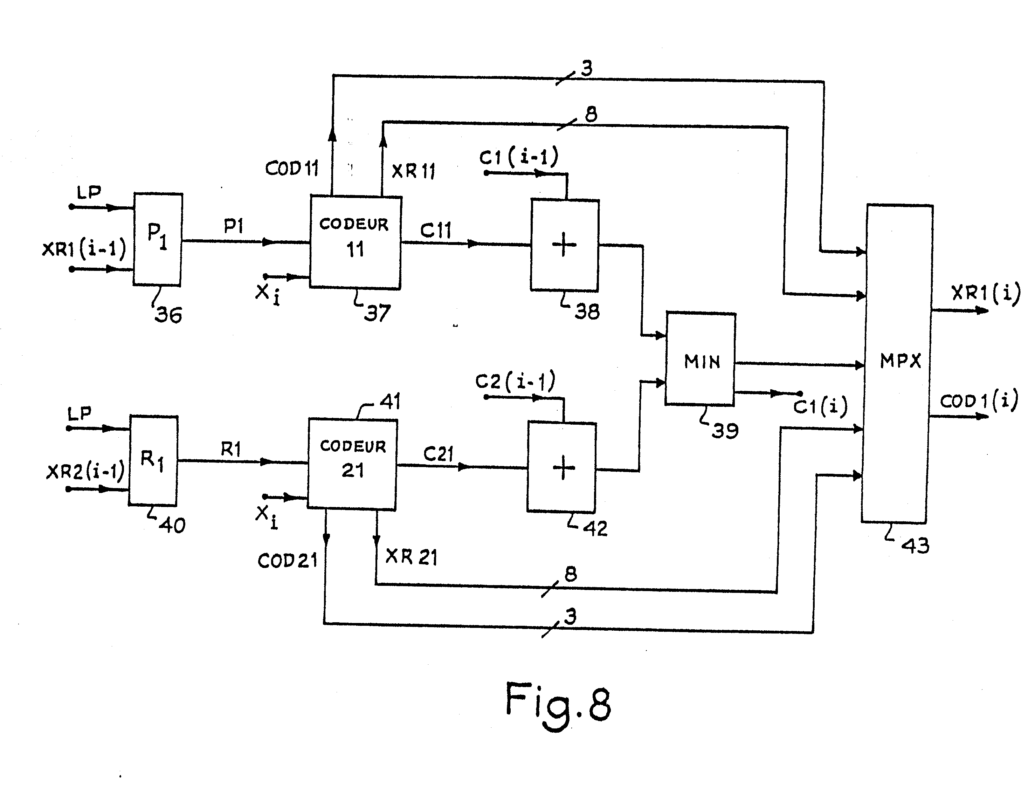

Le circuit de propagation des coûts 14 est représenté à la figure 8. Ce circuit comprend un circuit 36 de calcul d'une valeur de prédiction $P_1$ à l'aide d'une première caractéristique de prédiction relié par une première entrée à la sortie du circuit 20 de mémorisation des valeurs reconstruites de la ligne précédente et sur sa deuxième entrée à la sortie du circuit de mémorisation 17 de la valeur reconstruite $XR_{(i-1)}$ du point précédent. Le circuit 36 est également relié par sa sortie à une première entrée d'un circuit de calcul 37, de coût de codage $C_{11}$, lorsque la première caractéristique de quantification $Q_1$ est utilisée. Le circuit de calcul 37 est relié à une première entrée d'un additionneur 38, pour transmettre la valeur du coût $C_{11}$ calculé à l'additionneur 38. Une deuxième entrée de l'additionneur 38 est reliée à la sortie du circuit de mémorisation 16 qui contient le coût de codage $C_{1(i-1)}$ du point précédent lorsque la première caractéristique de quantification est utilisée. L'additionneur 38 effectue l'addition des coûts $C_{11}$ et $C_{(i-1)}$ et transmet le résultat à une première entrée d'un circuit 39 de calcul de coût global $C_{1(i)}$.

Le circuit de propagation des coûts 14 comprend également un circuit 40 de calcul de la valeur reconstruite ($R_1$), relié par une première entrée à la sortie du circuit 20 de mémorisation des valeurs reconstruites de la ligne précédente et par sa deuxième entrée à la sortie du circuit de mémorisation 19 de la valeur reconstruite $XR_{2(i-1)}$ du point précédent, pour parvenir dans l'état 2 du point Ni. Le circuit 40 est également relié par sa sortie à une première entrée d'un circuit de calcul 41 du coût de codage $C_{21}$. Le circuit de calcul 40 est relié à une première entrée d'un additionneur 42 pour transmettre la valeur du coût $C_{21}$ calculé à l'additionneur 42. Une deuxième entrée de l'additionneur 42 est reliée à la sortie du circuit de mémorisation 18 qui contient le coût de codage $C_{2(i-1)}$ du point précédent lorsque la deuxième caractéristique de quantification $Q_2$ est utilisée. L'additionneur 42 opère l'addition des coûts $C_{21}$ et $C_{2(i-1)}$ et transmet le résultat à une deuxième entrée du circuit 39 de calcul de coûts global $C_{1(i)}$.

Les circuits de calcul 37 et 41 calculent également respectivement les codes $COD_{11}$ et $COD_{21}$ ainsi que les valeurs reconstruites $XR_{11}$ et $XR_{21}$ correspondant aux coûts $C_{11}$ et $C_{21}$ calculés précédemment.

Un multiplexeur 43, commandé par la sortie du circuit 39 de calcul du coût global, connecte les sorties du circuit de calcul 37 fournissant la valeur de code $COD_{11}$ et la valeur reconstruite $XR_{11}$ ou connecte les sorties du circuit de calcul 41 fournissant la valeur de code $COD_{21}$ et la valeur reconstruite $XR_{21}$, aux entrées respectives des mémoires piles 22 et 21 de la figure 7.

Ainsi, lorsque le circuit de calcul 39 constate que le coût calculé par l'additionneur 38 est inférieur au coût calculé par l'additionneur 42, le multiplexeur 43 est commandé pour transmettre le code $COD_{11}$ et la valeur reconstruite calculée par le circuit 37 à l'entrée des mémoires piles 21 et 22. Dans le cas contraire, lorsque le coût calculé par l'additionneur 42 est inférieur au coût calculé par l'additionneur 38, seuls le code $COD_{21}$ et la valeur reconstruite $XR_{21}$, calculés par le dispositif de calcul 41 sont transmis aux entrées des mémoires piles 21 et 22.

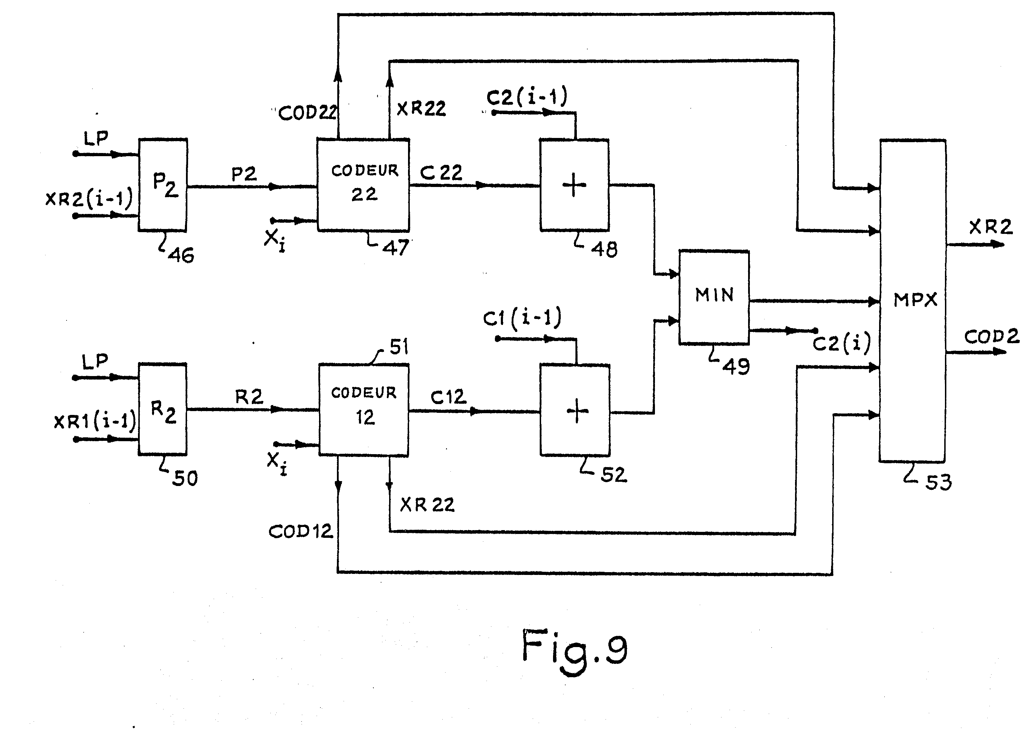

Le circuit 15 de propagation des coûts représentés à la figure 9 est identique au circuit 14 représenté à la figure 8, aux connexions d'entrée-sortie près, du circuit 15, avec les autres éléments représentés à la figure 7. C'est pourquoi sur la figure 9, les mêmes éléments que ceux de la figure 8 sont représentés avec des références augmentées de dix. Par conséquent les liaisons entre les éléments 46 à 53 de la figure 9 n'ont pas besoin d'être plus longuement décrites. On rappellera cependant que le circuit 15, représenté à la figure 9, assure la propagation des coûts permettant de coder les points en utilisant la deuxième caractéristique de quantification $Q_2$ , ce circuit réalisant la fonction

$$C_{2(i)} = MIN \ ( C_{2(i-1)} + C_{22} \ ; \ C_{1(i-1)} + C_{12} ) \ .$$

Le coût $C_{22}$ est calculé par le circuit de calcul 47 en fonction de la valeur de prédiction $P_2$ fournie par le prédicteur 46 à l'aide d'une deuxième caractéristique de prédiction et en fonction de la donnée entrante du point courant $X_i$ en utilisant la deuxième caractéristique de quantification $Q_2$ . Le circuit 47 fournit également le code $COD_{22}$ et la valeur reconstruite $XR_{22}$ . Le circuit de calcul 51 calcule la valeur de coût $C_{12}$ attachée à l'utilisation d'une fonction de reconstruction qui est elle-même fonction de la valeur de la donnée entrante $X_i$ du point courant et d'une valeur reconstruite $R_2$ élaborée par le circuit de reconstruction 50. Le circuit de calcul 51 calcule également la valeur de code $COD_{12}$ et la valeur reconstruite $XR_{22}$ qui correspondent aux conditions de calcul du coût $C_{12}$. L'additionneur 48 additionne les valeurs de coûts $C_{22}$ et $C_{2(i-1)}$ et l'additionneur 52 effectue l'addition des coûts $C_{12}$ et $C_{1(i-1)}$ . Le minimum des coûts globaux obtenus par les circuits 48 et 52 est calculé par le circuit de calcul 49 qui commande le multiplexeur 53, pour sélectionner, en fonction du résultat obtenu, une valeur de code et une valeur reconstruite, sur les sorties du circuit de calcul 47 ou sur les sorties du circuit de calcul 51. La valeur de code $COD_2$ et la valeur reconstruite $XR_2$ sélectionnées par le multiplexeur 53 sont transmises aux entrées des registres piles 23 et 24 de la figure 7. Le prédicteur 46 a une première entrée connectée à la sortie du circuit de mémorisation des valeurs reconstruites de la ligne précédente 20 et une deuxième entrée connectée à la sortie du circuit de mémorisation 19 du point précédent. Le circuit de reconstruction 50 a sa première entrée connectée à la sortie du circuit de mémorisation des valeurs reconstruites 20 et sa deuxième entrée connectée à la sortie du circuit de mémorisation 17 de la valeur reconstruite du point précédent.

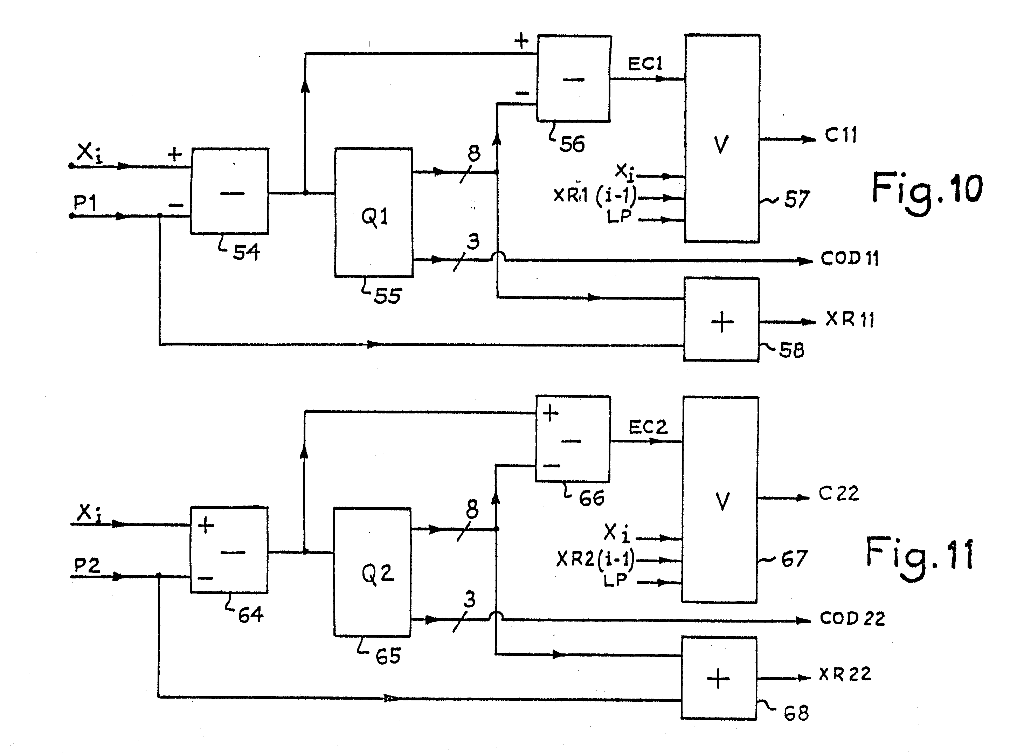

Un mode de réalisation du circuit de calcul 37 du coût $C_{11}$ de codage, pour passer, du codage du point Ni-1 au codage du point Ni en utilisant la première caractéristique $Q_1$ de quantification, est représenté à la figure 10. Ce circuit comprend un soustracteur 54, un quantificateur 55, un dispositif de calcul d'erreur de codage 56, un dispositif 57 d'élaboration du code $C_{11}$ en fonction, de l'erreur de codage délivrée par le dispositif 56, de la donnée du point courant $X_i$, de la valeur reconstruite du point précédent $XR_{1(i-1)}$ et des valeurs reconstruites des points de la ligne précédente LP. Le dispositif de calcul comprend également, un dispositif 58 de calcul de la valeur reconstruite $XR_{11}$. Le soustracteur 54 reçoit sur une première entrée la valeur $X_i$ de la donnée représentant le point courant Ni et sur une deuxième entrée la valeur $P_1$ de la prédiction calculée par le prédicteur 36. Le soustracteur 54 délivre sur sa sortie une erreur de prédiction $X_i-P_1$ à l'entrée du quantificateur 55 de calcul du code $COD_{11}$ dont la caractéristique de quantification est celle qui correspond au graphe représenté à la figure 5. L'erreur de prédiction $X_i-P_1$ est également transmise à une première entrée du dispositif de calcul d'erreur de codage 56 qui reçoit sur sa deuxième entrée l'erreur de prédiction quantifiée fourni par le quantificateur 55. Le dispositif de calcul de l'erreur de codage peut être réalisé à l'aide d'un simple soustracteur. L'erreur de codage calculée par le dispositif de calcul de l'erreur de codage 56 est transmise sur les entrées d'adresse d'une mémoire morte programmable 57 adressée également en fonction de la valeur de la donnée $X_i$ du point Ni, des valeurs reconstruites des points voisins trouvés dans le registre 17, de la valeur reconstruite $XR_{1(i-1)}$ du point précédent ou dans les circuits de mémorisation 20 pour les valeurs reconstruites des points de la ligne précédente. La mémoire morte programmable 57 contient en mémoire les valeurs de coûts $C_{11}$ correspondant aux erreurs de codage supérieures au seuil de visibilité défini par une fonction de visibilité du type de celle représentée à la figure 2. Lorsque l'erreur de codage, délivrée par le circuit 56, est supérieure au seuil de visibilité correspondant à l'écart entre la donnée $X_i$ du point courant Ni et la valeur reconstruite des points voisins, un certain coût $C_{11}$ est délivré en sortie de la mémoire 57 et ce coût $C_{11}$ peut être nul si l'erreur de codage est inférieure au seuil de visibilité correspondant. Le dispositif de calcul de la valeur reconstruite 58 est dans l'exemple de la figure 10 réalisé à l'aide d'un simple additionneur qui additionne la valeur de la prédiction $P_1$ délivrée par le prédicteur 36 à l'erreur de prédiction quantifiée $Q(X-P_1)$ délivrée par le quantificateur 55 pour former la valeur reconstruite $XR_{11}$.

Un exemple de réalisation du circuit de calcul du coût $C_{22}$ est montré à la figure 11. Comme ce circuit est identique au circuit de la figure 10, les éléments de la figure 11 qui sont homologues aux éléments de la figure 10, sont représentés avec des références augmentées de 10. De façon similaire à la figure 10, la mémoire programmable 67 fournit un coût $C_{22}$ qui représente l'écart entre une erreur de codage calculée par le circuit 66 et un seuil de visibilité défini par une fonction de visibilité du type de celle représentée à la figure 2, en fonction de l'écart existant entre la donnée $X_i$ du point courant et des valeurs reconstruites des points voisins du point courant telle que, notamment, la valeur reconstruite $XR_{2(i-1)}$ du point précédent. L'erreur de codage, fournie par le circuit 66, correspond à la différence entre l'erreur de prédiction $X_i - P_2$ fournie par le soustracteur 64 et l'erreur de prédiction quantifiée $Q(X_i - P_2)$ fournie par le quantificateur 65 utilisant la deuxième caractéristique de quantification $Q_2$ pour calculer le code $COD_{22}$. La caractéristique de quantification $Q_2$ est conforme à celle représentée à la figure 6B. Le quantificateur 65 délivre également sur sa sortie le code correspondant $COD_{22}$.

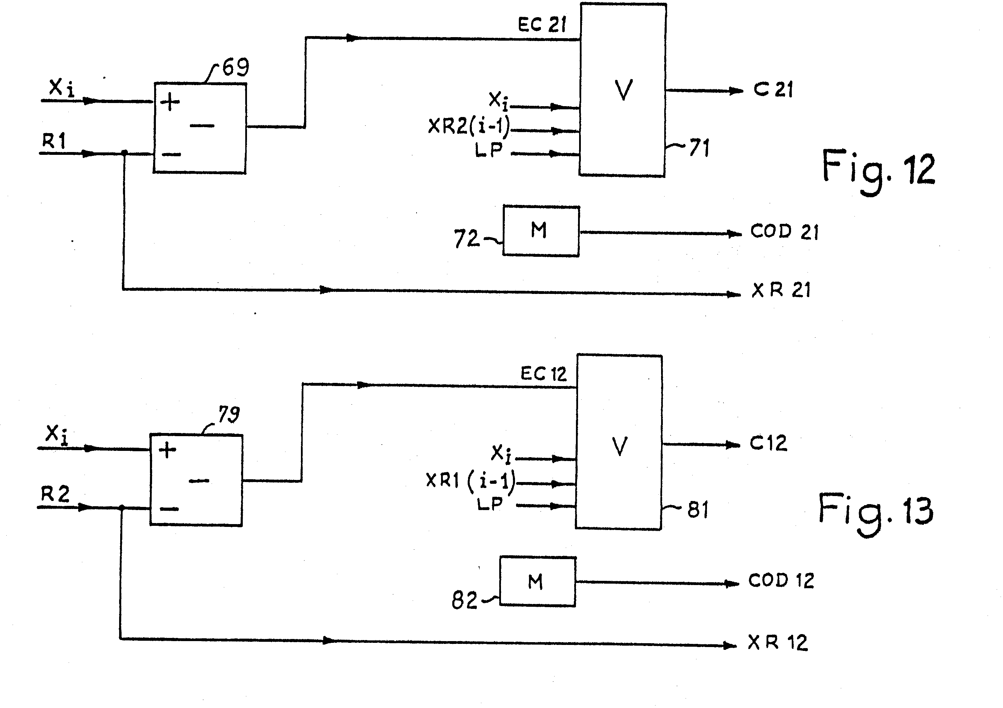

Le circuit de calcul du coût $C_{21}$ pour placer le point Ni+1 dans l'état 1 en venant de l'état 2 du point Ni est représenté à la figure 12. Ce circuit comprend un soustracteur 69 recevant sur une première entrée la donnée $X_i$ à coder du point courant Ni et sur sa deuxième entrée la valeur reconstruite $R_1$ du point précédent en fonction des points voisins. Le soustracteur 69 est connecté par sa sortie à une entrée d'adressage d'une mémoire morte programmable 71 qui contient une fonction de visibilité de l'erreur de codage dont la sortie délivre une valeur de coût de codage $C_{21}$. La mémoire 72 contient le code $COD_{21}$ qui correspond au changement de quantificateur nécessité par cette opération, ce code $COD_{21}$ pourra, par exemple, avoir pour valeur la valeur binaire 111.

Le dispositif représenté à la figure 13 représente les détails de réalisation du dispositif de calcul 51 de codage du coût $C_{12}$ de la figure 9. Ce dispositif contient des éléments similaires à ceux déjà décrits à la figure 12, et portent par conséquent les références des éléments similaires de la figure 12 augmentées de 10. Le soustracteur 79 calcule l'erreur de codage $EC_{12}$ correspondant à la différence entre la donnée courante $X_i$ du point courant et la valeur reconstruite $R_2$ des points voisins fournis par le reconstructeur 50 de la figure 9. Le code $EC_{12}$ est transmis sur une ligne d'adresse de la mémoire morte programmable 81 qui contient une fonction de visibilité de l'erreur de codage, similaire à celle représentée à la figure 2, pour calculer le coût $C_{12}$ en fonction de l'erreur de codage $EC_{12}$ et des valeurs de la donnée du point courant $X_i$, des valeurs reconstruites du point précédent $XR_{1(i-1)}$ et des valeurs reconstruites de la ligne précédente trouvée dans le dispositif de mémorisation 20. Comme le coût $C_{12}$ calculé correspond à un changement d'état, la mémoire 82 contient le code de changement $COD_{12}$ qui comme dans le cas de la figure 12 correspond par exemple à la valeur binaire 111. La valeur reconstruite $XR_{12}$ est prise directement sur l'entrée du soustracteur 79 recevant la valeur reconstruite $R_2$.

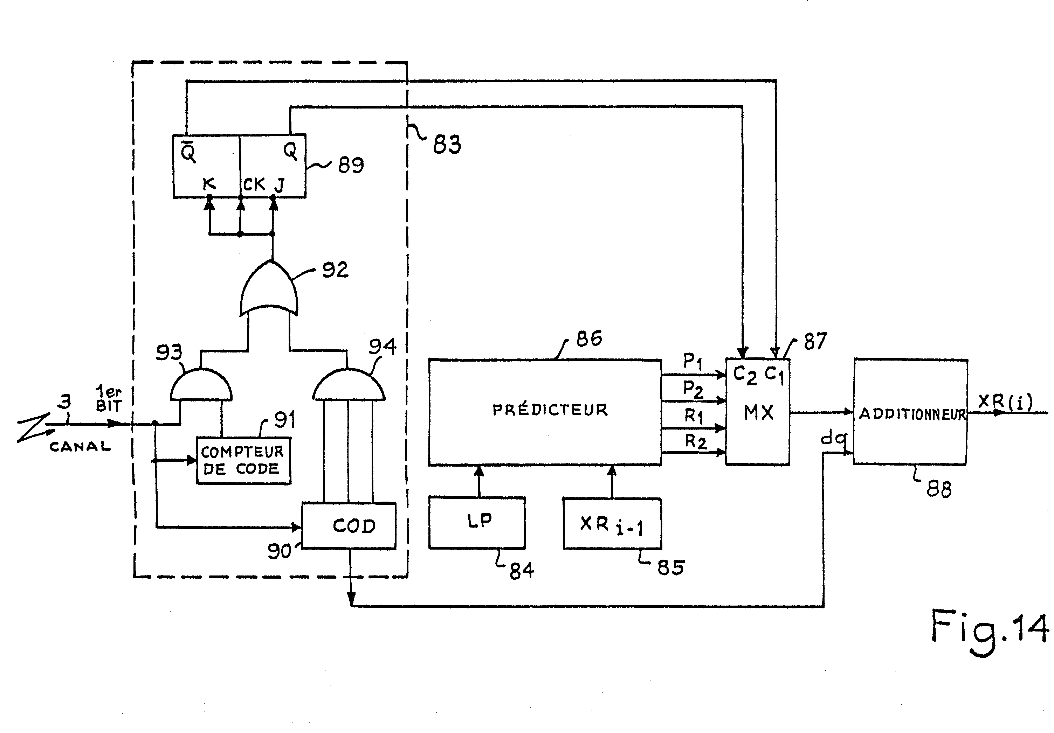

Le mode de réalisation du dispositif de réception est représenté à la figure 14. Le dispositif de réception comprend un organe de commande 83, un dispositif de mémorisation des valeurs reconstruites de la ligne précédente 84, un dispositif de mémorisation 85 de la valeur reconstruite $XR_{(i-1)}$ du point précédent, un prédicteur 86, un multiplexeur 87 et un additionneur 88. L'organe de commande 83 est constitué par un basculeur 89 de changement d'état de caractéristique de prédiction, un registre de mémorisation des codes 90 et un compteur de codes 91. L'entrée j du basculeur 89 est reliée à la sortie d'une porte OU 92 à deux entrées, la première entrée étant reliée au canal de transmission 3 par l'intermédiaire d'une porte ET à deux entrées 93. La deuxième entrée de la porte OU 92 est reliée à la sortie d'une porte ET 94 à trois entrées qui sont reliées respectivement aux sorties du registre de mémorisation des codes reçus 90. Le premier bit, reçu sur le canal de transmission 3, initialise le comptage du compteur de code 91 et positionne le basculeur 89 dans l'état 1 logique si le premier bit reçu a la valeur 1 logique, ou laisse dans l'état 0 logique le basculeur 89 lorsque le premier bit reçu a la valeur 0. Le basculeur 89 change ensuite d'état chaque fois qu'un changement de code est signalé par la valeur du code de changement C égale 111 provenant du canal de transmission. Le code de changement C est décodé par la porte ET 94 qui présente à sa sortie un état 1 logique lorsque le code de changement est mémorisé à l'intérieur du registre de code 90. Le prédicteur 86 calcule les valeurs de prédiction $P_1$ et $P_2$ et deux valeurs de

données reconstruites $R_1$ et $R_2$. Ces valeurs sont calculées de façon identique à celles obtenues par le prédicteur de l'émetteur, à l'aide des valeurs des données reconstruites à la ligne précédente trouvées dans le registre 84 et de la valeur reconstruite du point précédent trouvée dans le registre 85. Le multiplexeur 87, commandé par les sorties Q et $\bar{Q}$ du basculeur 89, sélectionne une des valeurs $P_1$, $P_2$, $R_1$ ou $R_2$ pour l'appliquer à une première entrée de l'additionneur 88 dont l'autre entrée est reliée à la sortie du registre de code 90 qui contient l'erreur de prédiction quantifiée $d_q$ transmise sur le canal de transmission 3. La valeur reconstruite correspondante est transmise à la sortie de l'additionneur 88.

Bien que les principes de la présente invention aient été décrits ci-dessus en relation avec des exemples particuliers de réalisation, il faut comprendre que la description n'est faite qu'à titre d'exemple et ne limite pas la portée de l'invention. En particulier, on comprendra que le procédé qui vient d'être décrit et qui consiste à opérer des commutations entre deux caractéristiques de quantification en fonction de l'allure locale du signal de télévision reste dans son principe le même si la commutation a lieu seulement sur des caractéristiques de prédiction ou des prédicteurs différents en utilisant pour le calcul des codes à transmettre une seule et même caractéristique de quantification pour placer chaque point selon deux états de codage différents. Egalement, l'architecture du dispositif de codage, représentée à la figure 7, pourra être réalisée suivant plusieurs variantes d'exécutions qui seront dictées, dans la plupart des cas, par le choix des fonctions de prédiction ($P_1$ $P_2$) et de reconstruction ($R_1$ $R_2$) des prédicteurs (36, 46) et reconstructeurs (40, 50). Dans le cas où les fonctions de prédiction et de reconstruction consistent simplement à réutiliser la valeur de la donnée du point précédemment reconstruite dans la ligne, les dispositifs qui viennent d'être décrits n'auront pas à subir d'adaptation particulière, tout le traitement pouvant se faire en prenant deux lignes de retard, l'émission des codes de la ligne J étant effectuée simultanément, au calcul des codes relatifs aux points de la ligne J+1 par le dispositif 13 et à la propagation des coûts de codage relatifs aux points de la ligne J+2 par le dispositif 12.

Par contre, dans le cas où les fonctions de prédiction et de reconstruction prennent en compte les données reconstruites des points de la ligne précédente, la séquence de transmission et de préparation des codes qui vient d'être décrite, ne pourra plus être utilisée, car pour propager les coûts de la ligne J il faut disposer des valeurs reconstruites de la ligne précédente qui ne seront disponibles qu'au moment de l'exploration des points de la ligne J+2 et dans ce cas le retard se cumule.

Pour remédier à cet inconvénient, une première solution pourra consister à utiliser une mémoire d'image, pour mémoriser la première et la deuxième trame de l'image, l'émission des codes de la ligne J de la première trame et le calcul des codes de la ligne J de la deuxième trame s'effectuant simultanément pendant la propagation des coûts de la ligne J+1 de la première trame et inversement l'émission des codes de la ligne J de la deuxième trame et le calcul des codes de la ligne J+1 de la première trame s'effectuant simultanément pendant la propagation des coûts de la ligne J+1 de la deuxième trame. Une deuxième solution consiste à coder les lignes de l'image alternativement dans un sens et dans l'autre en utilisant une mémoire ligne, de cette façon les valeurs reconstruites de la ligne précédente sont disponibles pour la propagation des coûts de codage de la ligne suivante.

## REVENDICATIONS

1. Procédé de compression de débit de données successivement transmises entre un émetteur et un récepteur de télévision, les données étant représentatives des valeurs de luminance et/ou de chrominance de chaque point d'une image de télévision et étant codées à l'émetteur par un dispositif de codage différentiel (1) du type comprenant au moins un prédicteur (4), un quantificateur (5), un dispositif (6) de reconstruction de la donnée transmise et un allocateur de code (7) et décodées au récepteur par un décodeur différentiel (2) comprenant au moins un transformateur de codes (9), un prédicteur (10) et un dispositif (11) de reconstruction de la donnée transmise, le procédé consistant à déterminer avant l'émission en fonction des positions respectives des points à l'intérieur des zones uniformes ou des zones de contours les codes à transmettre à l'aide d'au moins deux caractéristiques différentes ($Q_1$ et $Q_2$) de quantification et/ou de prédiction ($P_1$ et $P_2$) et à transmettre l'indication (C) de changement de caractéristique au récepteur à la place de la donnée relative au point pour lequel intervient ce changement lorsque le codage de la donnée est obtenu en utilisant une caractéristique différente de celle qui a été utilisée pour la donnée précédemment transmise, caractérisé en ce que le codage des données à transmettre effectué par l'allocateur de code (7) est obtenu à l'aide de codes binaires dont les longueurs dépendent du nombre de niveaux de quantification de chaque caractéristique de quantification utilisée et en ce que la caractéristique de quantification ($Q_2$) pour quantifier les échantillons compris dans les zones uniformes de l'image a un nombre de niveaux de quantification inférieur au nombre de niveaux de quantification de la caractéristique de quantification ($Q_1$) utilisée pour quantifier les échantillons compris dans les zones de contours.

2. Procédé selon la revendication 1, caractérisé en ce que le codage des données à transmettre est effectué en utilisant des codes binaires de longueurs différentes, les données relatives aux points situés dans les zones de contour de l'image étant codées avec des codes de longueur plus grande que les codes utilisés pour coder les données relatives aux points situés dans les zones uniformes de l'image.

0148063

25

3. Procédé selon la revendication 2, caractérisé en ce que les codes utilisés pour coder les échantillons des points situés dans les zones uniformes de l'image ont une longueur de 2 bits.

4. Procédé selon la revendication 1, caractérisé en ce que le code utilisé pour coder les données des points situés dans les zones uniformes est un code à longueur variable.

5. Procédé selon l'une quelconque des revendications 1 à 4, caractérisé en ce que les codes utilisés pour coder les échantillons des points situés dans les zones de contours de l'image ont des longueurs de 3 bits.

6. Procédé selon l'une des revendications 1 à 5, caractérisé en ce que le codage des données consiste à établir les coûts de codage et les codes correspondants des données de chaque point à transmettre pour chacune des caractéristiques de quantification et/ou de prédiction utilisée, chaque coût étant obtenu par une mesure du dépassement de l'erreur de codage de chaque point au-dessus d'un seuil de visibilité pour lequel l'erreur devient apparente sur l'image reçue, à définir une première suite $C_{1(i)}$ de coûts pour coder les données de chaque point en utilisant une première caractéristique et une deuxième suite $C_{2(i)}$ de coûts pour coder les données de chaque point en utilisant une deuxième caractéristique, chaque coût d'une suite étant obtenu à partir des coûts obtenus correspondants au codage du point précédent en déterminant le minimum des coûts calculés en fonction soit du coût précédent de la même suite ou du coût précédent de l'autre suite, à repérer dans chaque suite à l'aide d'un code de changement (C) chaque coût minimum qui est obtenu à partir du coût de codage du point précédent de l'autre suite et à ranger les codes à transmettre correspondants aux coûts calculés de l'une ou l'autre suite en déterminant un chemin de codage pouvant alterner sur l'une ou l'autre suite, en commençant par les codes de la suite dont le dernier coût calculé est inférieur au coût correspondant de l'autre suite et en continuant successivement par les codes de l'autre suite dès qu'un code de changement dans une suite est rencontré.

7. Système de compression de débit de données successivement transmises entre un émetteur et un récepteur reliés entre eux par un canal de transmission (3) pour la mise en oeuvre du procédé selon l'une quelconque des revendications 1 à 6, caractérisé en ce que le dispositif (1) de codage différentiel de l'émetteur comprend, un dispositif (12) de propagation des coûts pour calculer le coût de codage de chaque point en fonction d'une part d'une première et d'une deuxième caractéristique de quantification et/ou de prédiction et d'autre part en fonction des coûts de codage déterminés pour les points précédents, ainsi qu'un dispositif de calcul (13) des codes et des valeurs reconstruites pour sélectionner les codes à transmettre suivant un chemin de codage pour lequel la propagation des coûts est minimum.

8. Système selon la revendication 7, caractérisé en ce que le dispositif (12) de propagation des coûts comprend un premier circuit (14) de propagation des coûts pour calculer la première suite de coût et pour coder les données de chaque point en utilisant la première caractéristique de quantification $Q_1$ , et par un deuxième circuit (15) de propagation des coûts pour calculer la deuxième suite des coûts et pour coder les données de chaque point en utilisant la deuxième caractéristique de quantification $Q_2$ .

9. Système selon les revendications 7 et 8, caractérisé en ce que le dispositif de calcul (13) des codes et des valeurs reconstruites comprend un premier ensemble (21, 22) d'éléments de mémorisation des codes et des valeurs reconstruites correspondantes fournis par le premier circuit (14) de propagation des coûts, un deuxième ensemble (23, 24) d'éléments de mémorisation des codes et des valeurs reconstruites correspondantes fournis par le deuxième circuit (15) de propagation des coûts, les premier et deuxième moyens de mémorisation étant organisés en pile, ainsi qu'un multiplexeur (25) pour lire les codes à émettre dans l'un ou l'autre ensemble de mémorisation, la lecture des codes successivement rangés dans un élément de mémorisation étant interrompue pour lire les codes de rangs suivants rangés dans l'autre élément de mémorisation dès qu'un code de changement C est rencontré dans la suite des codes contenus dans l'élément de mémorisation qui est en cours de lecture.

10. Système selon l'une quelconque des revendications 7 à 9, caractérisé en ce que la lecture des éléments de mémorisation (21, 22, 23, 24) des codes et des valeurs reconstruites est commandée en fin de ligne d'image par un circuit d'initialisation (29), et commence par l'élément de mémorisation qui a été chargé par le circuit de propagation des coûts dont le coût de codage propagé au dernier point de la ligne est minimum.

11. Système selon l'une quelconque des revendications 7 à 10, caractérisé en ce qu'un circuit de propagation des coûts (14, 15) comprend un premier circuit (37, 47) de calcul du coût de codage du point de l'image courant à partir de la valeur reconstruite de la donnée correspondant au point précédent en utilisant la même caractéristique de quantification que celle utilisée pour le codage du point de l'image précédent, le premier circuit (37, 47) de calcul du coût de codage étant relié par sa sortie à une première entrée d'un additionneur (38, 48) dont l'autre entrée est reliée à un dispositif de mémorisation (16, 18) du coût de codage du point d'image précédent effectué en utilisant la même caractéristique de quantification, un deuxième circuit (41, 51) de calcul d'un coût de codage effectué à partir de la valeur reconstruite de la donnée du point d'image précédent obtenu à partir d'une caractéristique de quantification différente de celle utilisée par le premier circuit (37, 47) de calcul du coût de codage, le deuxième circuit de calcul (41, 51) contenant en mémoire un code de changement de caractéristique de quantification et étant relié par sa sortie à une première entrée d'un deuxième additionneur (42, 52) dont l'autre entrée est reliée à un circuit de mémorisation (18) du coût de codage du point précédent lorsque le codage est obtenu en utilisant une caractéristique de quantification différente de celle utilisée par le premier circuit (37, 47) de calcul, les sorties des premier (38, 48) et deuxième (42, 52) additionneurs étant reliées aux entrées d'un circuit (39) de calcul de coût global pour déterminer le plus petit des coûts fournis par les sorties des premier (38, 48) et deuxième (42, 52) additionneurs, pour sélectionner le code et la valeur reconstruite fournis par le premier (37, 47) ou le deuxième (41, 51) circuits de calcul de coût de codage qui délivre le plus petit coût et pour transférer la valeur du code et la valeur reconstruite sélectionnée dans les éléments de mémorisation correspondants du dispositif de calcul des codes et des valeurs reconstruites (13).

12. Système selon la revendication 11, caractérisé en ce que le premier circuit de calcul des coûts de codage du point de l'image courant comprend une mémoire morte (57, 67) dans laquelle sont mémorisées les valeurs des coûts correspondant aux erreurs de codage supérieures aux

0148063

28

seuils de visibilité de ces erreurs obtenu en utilisant une première ou une deuxième caractéristique de quantification, la mémoire morte étant adressée, d'une part, par un dispositif (56, 66) de calcul d'erreur de codage effectuant la différence entre l'erreur de prédiction du point courant à coder et sa valeur quantifiée à l'aide d'une caractéristique de quantification, et d'autre part, par les valeurs des données du point courant de l'image et de celles des points voisins reconstruites.

13. Système selon la revendication 11, caractérisé en ce que le deuxième circuit de calcul des coûts de codage du point de l'image courant comprend une mémoire morte (71, 81) dans laquelle sont mémorisées les valeurs des coûts correspondants aux erreurs de codage supérieures aux seuils de visibilité de ces erreurs, lorsque, le code du point courant est remplacé par un code de changement de caractéristique, la mémoire morte (71, 81) étant adressée, d'une part, par un dispositif (69, 79) de calcul d'erreur de codage effectuant la différence entre la donnée représentant le point courant et sa valeur reconstruite en fonction des valeurs des données des points précédents et d'autre part, par les valeurs des données du point courant et de celles des points voisins reconstruites.

14. Système selon l'une quelconque des revendications 7 à 13, caractérisé en ce que le dispositif de décodage du récepteur est un dispositif décodeur différentiel double comprenant un prédicteur (86) pour le calcul des deux valeurs de prédiction $P_1$ et $P_2$ et de deux valeurs reconstruites $R_1$ et $R_2$ calculées de façon identique à celles de l'émetteur et sélectionnées l'une ou l'autre chaque fois qu'un code de changement est reçu par le récepteur.

15. Système selon l'une quelconque des revendications 7 à 14, caractérisé en ce que les première et deuxième caractéristiques de quantification sont identiques et que les dispositifs de calcul des .codes utilisent des caractéristiques de prédiction différentes.

Fig.1

Fig.2

Fig.3

Fig.4

Fig.5

Fig.6 A

Fig.6 B

Fig.7

3/8

0148063

Fig.8

0148063

Fig.9

5/8

0148063

Fig.10

Fig.11

0148063

Fig. 12

Fig. 13

Fig.14

8/8

0148063

Office européen
des brevets

**RAPPORT DE RECHERCHE EUROPEENNE**

EP 84 40 2533

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 200 886 (MUSMANN) <br> * Colonne 1, lignes 16-43; colonne 3, lignes 41-45; figures 1,3a * | 1,6 | H 04 N 7/13 |
| A | RUNDFUNKTECHNISCHE MITTEILUNGEN, vol. 20, no. 6, 1976, pages 236-241, Hamburg, DE; J. HEITMANN: "Ein systemkompatibles, digitales Farbfernsehsignal" <br> * Page 239, colonne de gauche, lignes 15-22 * | 1 | |
| A | GB-A-2 003 001 (D.E. PEARSON) <br> * Page 7, lignes 64-72 * | 1 | |
| A | US-A-4 023 199 (NETRAVALI) <br> * Colonne 3, lignes 21-35; colonne 7, ligne 63 - colonne 8, ligne 42 * | 1,3,5 | DOMAINES TECHNIQUES RECHERCHES (Int. Cl.4) <br><br> H 04 N 7/13 |
| A | US-A-3 824 590 (LIMO) <br> * Colonne 3, lignes 29-36; figures 1,2 * | 4 | |

Le présent rapport de recherche a été établi pour toutes les revendications

| Lieu de la recherche | Date d'achèvement de la recherche | Examinateur |
|---|---|---|
| LA HAYE | 27-03-1985 | YVONNET J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82